# FASCICULE DE BREVET EUROPEEN

(11) **EP 2 516 269 B1**
(45) Date de publication et mention de la délivrance du brevet: **12.08.2015**
(21) Numéro de dépôt: 10790648.9
(22) Date de dépôt: 20.12.2010
(51) Int. Cl.: B64C 30/00, B64C 5/08, B64C 5/10

(54) **VEHICULE AERIEN ULTRA-RAPIDE ET PROCEDE DE LOCOMOTION AERIENNE ASSOCIE**
ULTRASCHNELLES LUFTFAHRZEUG UND ZUGEHÖRIGE VERFAHREN FÜR FORTBEWEGUNG IN DER LUFT
ULTRA-RAPID AIR VEHICLE AND RELATED METHOD FOR AERIAL LOCOMOTION

(30) Priorité: 22.12.2009 FR 0959366
(43) Date de publication de la demande: 31.10.2012
(73) Titulaire: Airbus Defence and Space SAS, 78130 Les Mureaux (FR); European Aeronautic Defence and Space Company EADS France Airbus Group SAS, 75016 Paris (FR)
(72) Inventeur: PRAMPOLINI, Marco, F-78240 Chambourcy (FR); CORABOEUF, Yohann, F-33700 Merignac (FR)
(74) Mandataire: Ilgart, Jean-Christophe
(86) Numéro de dépôt international: PCT/EP2010/070189
(87) Numéro de publication internationale: WO 2011/076706

(56) Documents cités:
- DE-A1- 2 136 129
- US-A- 2 944 764
- US-A- 3 093 348
- US-A- 3 146 971
- US-A- 4 538 779
- US-A- 5 529 263

## Description

### Domaine technique et art antérieur

L'invention concerne un véhicule aérien ultra-rapide ainsi qu'un procédé de locomotion aérienne à l'aide d'un véhicule aérien conforme au véhicule aérien de l'invention.

Des études sur le thème du transport ultra-rapide point à point ont été récemment entreprises au Japon et aux États-Unis. Dans le sillage de ces initiatives, EADS et ATRIUM ont également réalisé, en marge du programme ASP (ASP pour « ATRIUM SPACE PLANE »), des études de concept pour un véhicule aérien ultra-rapide point à point.

A ce jour, les véhicules aériens ultra-rapides point à point qui ont été réalisés sont les avions CONCORDE et Tupolev Tu-144, tous deux supersoniques. Le véhicule aérien ultra-rapide proposé par la présente invention permet d'améliorer très sensiblement les performances de ces deux avions.

En particulier, le véhicule aérien proposé par la présente invention diminue considérablement le bruit qui accompagne le passage du mûr du son, également appelé « bang » supersonique, lequel bruit a été la principale limite, si ce n'est la seule, à l'ouverture de lignes autres que transatlantiques pour l'avion CONCORDE.

Il est connu du brevet US 3 093 348 A un avion hypersonique qui comprend une aile delta, un fuselage qui contient un réservoir d'hydrogène liquide ou à l'état de neige fondue et un ou plusieurs réservoirs d'oxygène liquide et un système de moteurs comprenant au moins un turboréacteur dans le fuselage et au moins un statoréacteur et un moteur fusée dans une partie arrière du fuselage.

Il est également connu du brevet US 2 944 764 A un avion supersonique à deux corps placés côte à côte et reliés par leurs parties centrale et arrière.

Il est également connu du brevet US 4 538 779 A un empennage pour avion supersonique.

Il est également connu du brevet US 5 529 263 A un avion supersonique à aile delta muni de moteurs supersoniques et d'au moins un moteur subsonique auxiliaire.

Il est également connu du brevet US 3 146 971 A un avion supersonique ayant une aile delta et des turboréacteurs placés dans le fuselage de part et d'autre de l'aile delta.

Il est également connu du brevet DE 21 36 129 Il une unité de propulsion pour navette spatiale.

### Exposé de l'invention

En effet, l'invention concerne un véhicule aérien comprenant un fuselage, une aile delta gothique répartie de part et d'autre du fuselage, et un système de moteurs apte à propulser le véhicule aérien. Le véhicule aérien est caractérisé en ce que :
- Le fuselage contient un réservoir d'hydrogène liquide ou à l'état de neige fondue (état « slush » en langue anglaise) et un ou plusieurs réservoirs d'oxygène liquide ;
- L'aile delta gothique a un extrados et un intrados plats, l'emplanture de l'aile prenant naissance sensiblement au niveau où débute l'élargissement de la partie avant du fuselage ;
- Une ailette est fixée à chaque extrémité extérieure du bord de fuite de l'aile delta à l'aide d'une pièce cylindrique dont l'axe est parallèle à l'axe du fuselage, chaque ailette étant constituée de deux éléments sensiblement identiques de forme trapézoïdale fixés à la pièce cylindrique et situés dans un même plan, de part et d'autre de la pièce cylindrique, chaque pièce cylindrique étant apte à se mouvoir en rotation autour de son axe de telle sorte que les deux éléments de forme trapézoïdale qui sont fixés à la pièce cylindrique soient positionnés soit dans un plan parallèle au plan de l'aile delta gothique, soit dans un plan perpendiculaire au plan de l'aile delta gothique; et
- Le système de moteurs comprend au moins un turboréacteur apte à se rétracter dans le fuselage et situé au niveau d'une partie avant du fuselage, au moins un statoréacteur de géométrie fixe et un moteur fusée situé dans une partie arrière du fuselage, une porte située sur la partie arrière du fuselage étant apte à s'ouvrir ou se fermer pour, respectivement, ouvrir le moteur fusée sur l'extérieur ou isoler le moteur fusée de l'extérieur.

Selon une caractéristique supplémentaire de l'invention, le fuselage est constitué d'un tronçon avant ou nez qui prolonge un tronçon de cabine et d'un tronçon arrière, le tronçon avant ayant une section constante qui s'élargit progressivement à partir du tronçon de cabine et le tronçon arrière ayant une section constante qui rétrécit progressivement vers l'arrière du véhicule.

Selon une autre caractéristique supplémentaire de l'invention, chaque réservoir d'oxygène liquide a son centre de gravité positionné, qu'il soit vide ou plein, au plus près du centre de gravité du véhicule aérien.

Selon encore une autre caractéristique supplémentaire de l'invention, le moteur fusée est constitué soit d'un moteur unique, soit d'un moteur principal accompagné de un ou plusieurs moteurs auxiliaires.

Selon encore une autre caractéristique supplémentaire de l'invention, le véhicule a une flèche de bord d'attaque sensiblement comprise entre 70° et 75°, calculée en référence à une aile delta droite.

L'invention concerne également un procédé de locomotion aérienne à l'aide d'un véhicule aérien conforme à l'invention, le procédé comprenant une phase de décollage du véhicule, caractérisé en ce que la phase de décollage comprend les étapes suivantes :
- une étape de roulage au sol du véhicule durant laquelle le véhicule est propulsé par les turboréacteurs pour atteindre un point d'alignement sur piste, les deux éléments de forme trapézoïdale de chacune des deux ailettes étant positionnés dans un plan parallèle à l'aile delta gothique en vue du décollage ;
- une étape d'ouverture ou de vérification d'un état d'ouverture de la porte arrière du véhicule ;
- une étape d'envol durant laquelle le véhicule aérien est propulsé simultanément par le ou les turboréacteurs et par le moteur fusée, le véhicule étant progressivement amené dans une phase de vol ascendante quasi-verticale par appel d'une forte poussée déployée par le moteur fusée de sorte que le véhicule atteigne et dépasse la vitesse MACH 1 durant la phase de vol ascendante, le ou les turboréacteurs étant arrêtés et rentrés dans le fuselage avant que la vitesse MACH 1 ne soit atteinte et les deux éléments de forme trapézoïdale de chacune des deux ailettes du véhicule aérien étant positionnés progressivement dans un plan perpendiculaire au plan de l'aile delta gothique dès que le véhicule atteint et/ou dépasse la vitesse MACH 1.

L'invention concerne également un procédé de locomotion aérienne à l'aide d'un véhicule aérien conforme à l'invention, le procédé comprenant une phase d'atterissage du véhicule à partir d'un couloir de vol de croisière dans lequel le véhicule est propulsé par une poussée du ou des statoréacteurs, les deux éléments de forme trapézoïdale de chacune des deux ailettes étant positionnés dans un plan perpendiculaire à l'aile delta gothique, caractérisé en ce que la phase d'atterissage du véhicule comprend les étapes suivantes :
- un arrêt du ou des statoréacteurs ;
- un déploiement progressif d'aerofreins (« split flaps » en langue anglaise) qui amène le véhicule jusqu'à une phase de descente sous forte pente avec une vitesse quasi-verticale transonique qui diminue ;
- une modification progressive de la position des deux éléments de forme trapézoïdale de chacune des deux ailettes de façon à placer lesdits éléments dans un plan parallèle au plan de l'aile delta gothique dès lors que la vitesse du véhicule atteint et/ou passe sous la vitesse MACH 1 ;
- une fermeture progressive des aérofreins et un déploiement et un allumage du ou des turboréacteurs dès lors que la vitesse du véhicule devient inférieure à MACH 1; et
- une insertion du véhicule dans le trafic aérien standard.

Selon encore une caractéristique supplémentaire de l'invention, le vol de croisière est caractérisé par :
- Une altitude de l'avion par rapport au sol sensiblement comprise entre 30000m et 35000m ;
- Une distance de dissipation de l'onde de choc de nez du véhicule sensiblement comprise entre 110km et 175km;
- Une vitesse de l'avion sensiblement comprise entre Mach 4 et Mach 4,5 ; et
- Un angle α d'ouverture du cône de Mach sensiblement compris entre 11° et 15°.

Le véhicule aérien ultra rapide proposé par l'invention offre une vitesse deux fois supérieure à celle du CONCORDE, soit Mach 4+, et une altitude de croisière au moins supérieure à 20km comparée à celle d'un avion de ligne conventionnel.

Au-delà de ces performances brutes, le véhicule aérien de l'invention permet avantageusement de transporter l'équivalent de 2-3 tonnes soit, par exemple, une vingtaine de passagers et offre, par ailleurs, un avantage particulièrement important en ce qui concerne l'aspect environnemental du fait d'une propulsion en phase d'accélération et de croisière assurée en combinant de l'oxygène respectivement embarqué (oxygène liquide) et ambiant et de l'hydrogène embarqué, le carburant du futur.

Les applications visées par le véhicule aérien ultra-rapide de l'invention sont duales, à savoir civiles et militaires.

Pour les applications civiles, le marché visé est principalement celui des voyages d'affaires et des passengers VIP (VIP pour « Very Important Person ») qui nécessitent des allers-retours transcontinentaux dans la journée.

Les applications militaires concernent, quant à elles, par exemple, la reconnaissance stratégique, le transport ultra-rapide de marchandises à haute valeur ajoutée ainsi que les commandos d'élites équipés. Un dérivé offensif du véhicule aérien pourrait réaliser des frappes de précision et des mises hors d'usage de cibles privilégiées de haute valeur ajoutée, par exemple par impulsions électromagnétiques de forte puissance, également appelées impulsions EMP (EMP pour « Electro Magnetic Pulse »). Tout comme les satellites, le véhicule aérien de l'invention offre une invulnérabilité presque totale vis-à-vis des systèmes anti-aériens conventionnels tout en présentant la flexibilité et la nonprédictibilité d'un avion classique.

La performance du véhicule aérien de l'invention autorise des distances franchissables d'environ 9000km (par exemple Paris - San Francisco ou Tokyo - Los Angeles) en trois heures de temps.

Le concept opérationnel ainsi que l'architecture du véhicule aérien de l'invention permettent:
- des opérations au départ et à l'arrivée d'installations aéroportuaires standards, sous réserve d'un ravitaillement en hydrogène et en oxygène liquide à prendre en compte ;
- un affranchissement de l'interaction avec la circulation aérienne générale en croisière (altitude de croisière au-delà des couloirs aériens actuels) ;
- des opérations quasiment en tout-temps, l'altitude du vol étant telle que les phénomènes météorologiques qui impactent la bonne conduite de vol sont inexistants ;
- une maintenance de nature aéronautique sur l'ensemble du véhicule à l'exception du système de moteurs fusée qui nécessite des opérations spécifiques.

### Brève description des figures

D'autres caractéristiques et avantages de l'invention apparaîtront à la lumière d'un mode de réalisation préférentiel fait en référence aux figures jointes, parmi lesquelles :
- La figure 1 représente une vue de dessous d'un véhicule aérien ultra-rapide selon l'invention ;
- La figure 2 représente une vue en perspective d'un élément particulier d'un véhicule aérien ultra-rapide selon l'invention ;
- La figure 3 représente une vue de profil d'un véhicule aérien ultra-rapide selon l'invention ;
- La figure 4 représente une demi-vue de dessus d'un véhicule aérien ultra-rapide selon l'invention ;
- La figure 5 représente une vue de face d'un véhicule aérien ultra-rapide selon l'invention ;
- La figure 6 représente une vue en coupe longitudinale d'un véhicule aérien ultra-rapide selon l'invention ;
- Les figures 7-11 représentent différentes vues en coupe transversale du véhicule aérien ultra-rapide de l'invention représenté en figure 6 ;
- La figure 12 représente une vue de détail du véhicule aérien ultra-rapide de l'invention représenté en figure 6 ;
- La figure 13 représente une vue arrière en perspective du véhicule aérien de l'invention ;
- Les figures 14A, 14B et 14C représentent des vues arrière partielles du véhicule aérien de l'invention pour différentes positions d'une porte apte à ouvrir ou fermer l'accès du moteur fusée sur l'extérieur ;
- La figure 15 représente une vue en perspective d'un véhicule aérien ultra rapide selon l'invention ;
- La figure 16 représente la variation du centre de poussée d'un véhicule aérien ultra-rapide de l'invention en fonction de la vitesse exprimée en MACH ;
- la figure 17 représente la variation de la stabilité de route d'un véhicule aérien ultra-rapide de l'invention en fonction de la vitesse exprimée en MACH ;
- Les figures 18-21 illustrent les différentes phases de vol d'un véhicule aérien ultra rapide selon l'invention.

Sur toutes les figures, les mêmes références désignent les mêmes éléments. Les grandeurs l représentent des distances. Les grandeurs Φ représentent des diamètres. Les grandeurs θ représentent des angles. Les grandeurs R représentent des rayons de courbure.

### Exposé détaillé de modes de réalisation préférés de l'invention

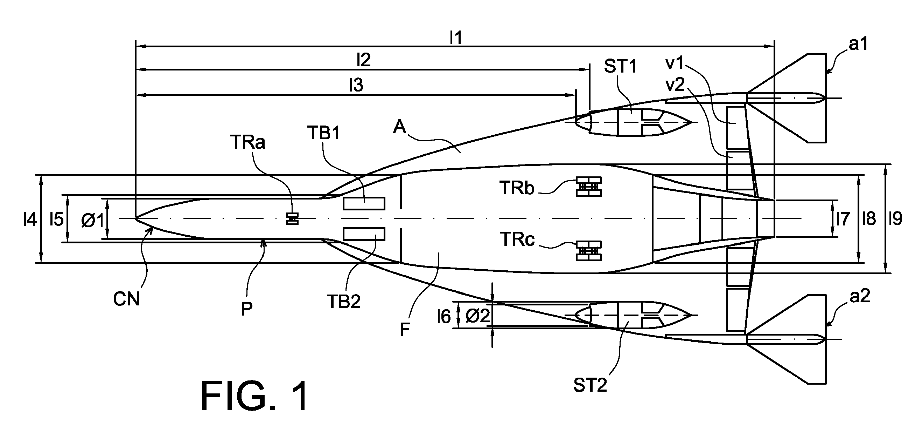

La figure 1 représente une vue de dessous d'un exemple de véhicule aérien ultra-rapide selon l'invention.

Sur la figure 1, les distances l représentées ont les valeurs suivantes, à titre d'exemple non limitatif :
11=52995mm ;
12=37855mm ;
13=36524mm ;
14=7135mm ;
15=4394mm ;
16=2150mm ;
17=3000mm ;
18=7115mm ;
19=8929mm.

De même, les diamètres Φ représentés ont les valeurs suivantes à titre d'exemple non limitatif :
Φ1 = 3500mm ;
Φ2=1800mm.

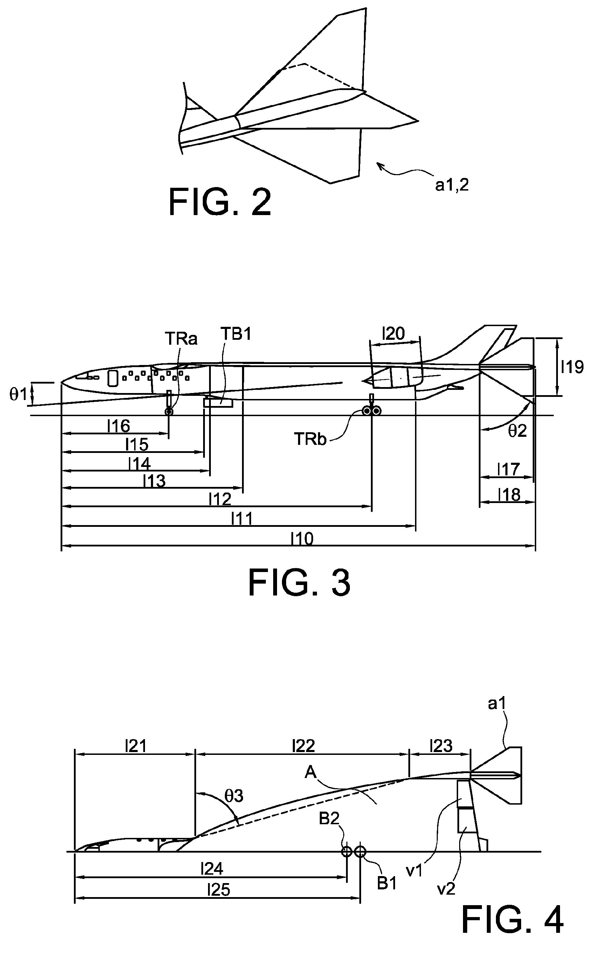

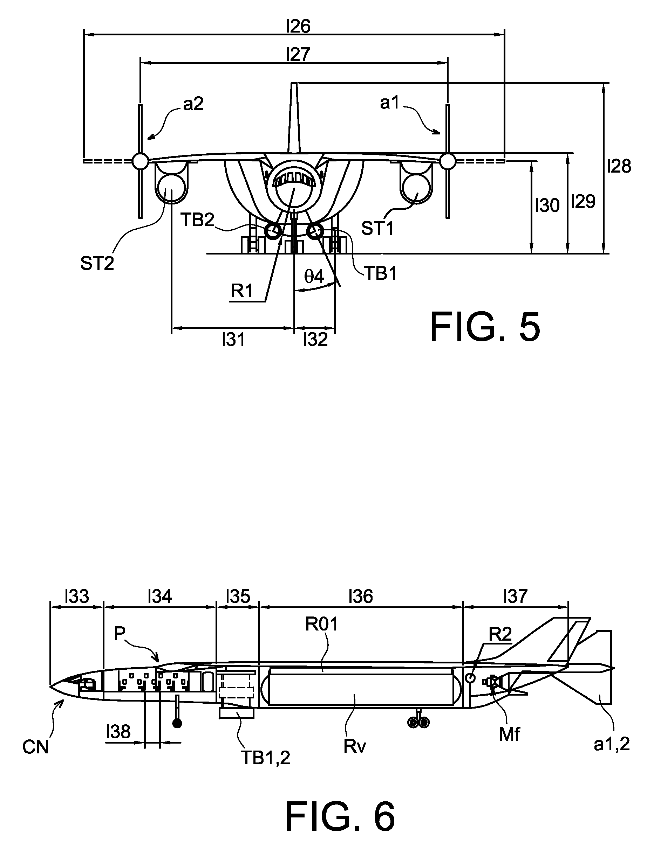

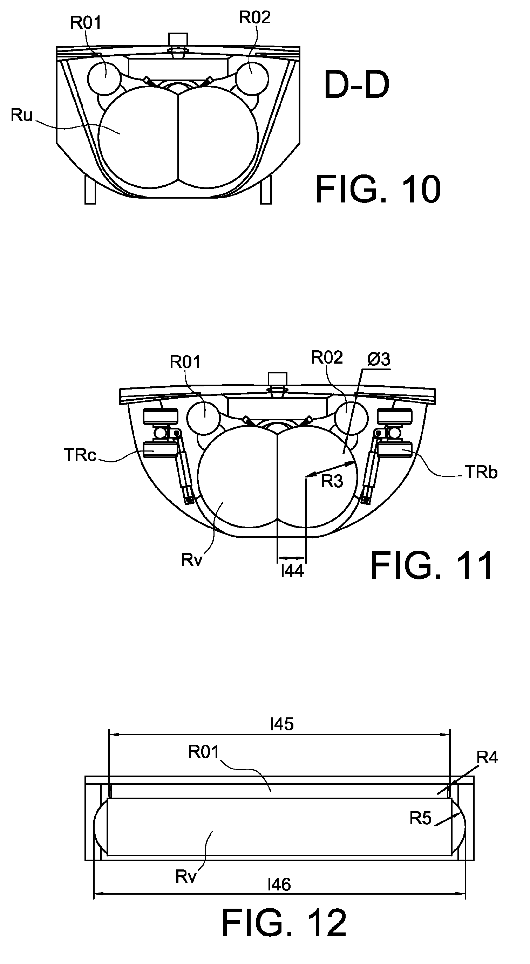

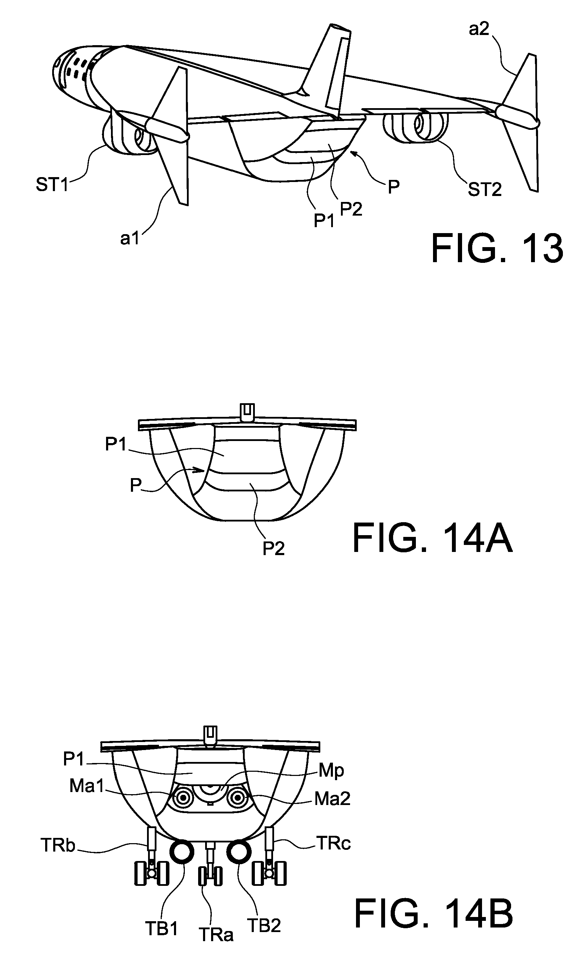

Le véhicule aérien ultra-rapide de l'invention selon l'exemple de la figure 1, comprend l'ensemble des éléments suivants :
- Un fuselage F qui contient un réservoir Rv à hydrogène liquide ou à l'état de neige fondue (cf. figures 6 et 10) et deux réservoirs d'oxygène liquide RO1 et RO2, les réservoirs Rv, RO1 et R02 étant destinés à alimenter un moteur fusée Mf ;
- Une aile A de type delta gothique ayant un extrados aussi plat que possible et munie à son extrémité arrière, de chaque côté du fuselage, de deux volets arrière v1, v2 ;
- Une flèche de bord d'attaque du véhicule θ3 (cf. figure 4) préférentiellement comprise entre 70° et 75°, calculée en référence à une aile delta droite ;
- Une cabine P destinée à contenir, par exemple, des passagers, située à l'avant de l'ensemble aile plus fuselage afin d'être dans le lit du vent lors des conditions de vol de croisière, permettant ainsi de minimiser la contribution de cette partie à la trainée totale du véhicule, tout en ne générant aucune portance ;
- Un cockpit et un nez formant un tronçon CN situé dans le prolongement de la cabine P, à l'avant du véhicule ;
- Un train d'atterrissage TRa, TRb, TRc apte à se loger dans le véhicule aérien, la cinématique du train d'atterrissage étant préférentiellement simplifée au maximum ;
- Deux ailettes mobiles a1, a2 placées symétriquement par rapport à l'axe longitudinal du véhicule, chaque ailette étant fixée à l'extrémité extérieure d'un bord de fuite de l'aile delta ;
- Deux statoréacteurs ST1, ST2 placés symétriquement par rapport à l'axe du véhicule, chaque statoréacteur ayant une géométrie fixe optimisée pour la phase de vol de croisière ;
- Deux turboréacteurs TB1, TB2 placés dans la zone de transition située entre la cabine P et le fuselage F et aptes à être rentrés dans le fuselage lorsqu'ils ne fonctionnent pas ;
- Un moteur fusée Mf (cf. figures 6, 14A, 14B) placé à l'arrière du fuselage et apte à être ouvert sur l'extérieur ou enfermé dans le fuselage à l'aide d'une porte arrière P du véhicule (cf. figures 14A-14C).

Dans l'exemple de la figure 1 décrit ci-dessus, le véhicule aérien de l'invention comprend deux turboréacteurs et deux statoréacteurs. De façon plus générale, toutefois, l'invention concerne également des véhicules aériens comprenant au moins un turboréacteur et au moins statoréacteur.

De façon préférentielle, les deux statoréacteurs ST1, ST2 ont leur entrée d'air placée en avant des zones du véhicule aérien qui sont affectées par les chocs secondaires et/ou de la zone du véhicule aérien qui est affectée par le choc de tête, permettant ainsi d'assurer une admission d'air en condition non perturbée.

L'élargissement de la partie avant du fuselage génère avantageusement un choc oblique secondaire interagissant fortement avec l'intrados de l'aile pour générer de la portance par compression communément appelée « compression lift » en langue anglaise.

La figure 2 représente une ailette mobile a1, a2 du moyen de transport aérien ultra rapide de l'invention. Une ailette mobile est constituée de deux éléments sensiblement identiques de forme trapézoïdale situés, dans un même plan, de part et d'autre d'une pièce cylindrique fixée à une extrémité extérieure d'un bord de fuite de l'aile delta. L'axe de la pièce cylindrique centrale est parallèle à l'axe longitudinal de l'avion. La pièce cylindrique est apte à se mouvoir en rotation pour positionner l'ailette mobile soit en position horizontale aux vitesses subsoniques, soit en position verticale aux vitesses supersoniques. Pour des raisons de commodité, les deux positions de l'ailette mobile sont représentées simultanément sur la figure 2.

La figure 3 représente une vue de profil du véhicule ultra-rapide de l'invention dans le cas où les ailettes a1, a2 sont verticales (i.e. perpendiculaires à l'axe du véhicule). Sur la figure 3, les distances l représentées ont les valeurs suivantes, à titre d'exemple non limitatif :
110=57630mm ;
111=42995mm ;
112=37685mm ;
113=21995mm ;
114=17995mm ;
115=17950mm ;
116=13000mm ;
117=6780mm ;
118=6657mm ;
119=7400mm ;
120=6097mm.

De même, les angles θ1 et θ2 représentés ont les valeurs suivantes, à titre d'exemple non limitatif :
θ1=5° ;
θ2=58°.

La figure 4 représente une demi-vue de dessus du véhicule ultra-rapide de l'invention. L'ailette a1 représentée est en position horizontale. Les références B1 et B2 indiquent, respectivement, la position du barycentre de l'aire de référence du véhicule dans la configuration subsonique (ailettes a1, a2 horizontales) et dans la configuration supersonique (ailettes a1, a2 verticales).

Les distances l représentées sur la figure 4 sont, à titre d'exemples non limitatifs:
121=15326mm ;
122=27878mm ;
123=7556mm ;
124=35009mm ;
125=36722mm.

L'angle θ3 (flèche de bord d'attaque du véhicule) est, à titre d'exemple non limitatif, égal à 74°.

La figure 5 représente une vue de face du véhicule aérien ultra-rapide de l'invention.

Les distances l sont ici les suivantes, à titre d'exemples non limitatif
126=27188mm ;
127=19788mm ;
128=11262mm ;
129=6578mm ;
130=6037mm ;
131=7900mm ;
132=2650mm.

Par ailleurs, le rayon R1 est égal à 2797mm et l'angle θ4 est égal à 20°.

La figure 6 représente une vue en coupe longitudinale du véhicule aérien de l'invention.

Les distances 1 représentées sur la figure 6 sont, à titre d'exemples non limitatifs :
133=5495mm ;
134=11500mm ;
135=4200mm ;
136=21000 ;
137=10800mm ;
138=1500mm.

Le rayon R2 est égal à 445mm.

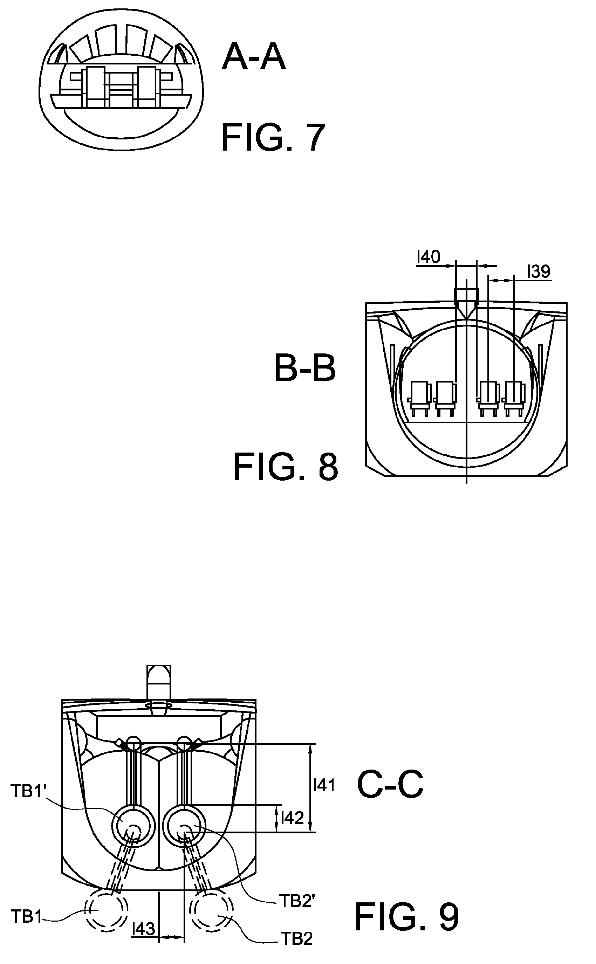

Les figures 7, 8, 9, 10 et 11 sont, respectivement, des vues du véhicule aérien de l'invention selon les coupes transversales A-A (cockpit), B-B (cabine), C-C (fuselage derrière la cabine, juste avant les turboréacteurs), D-D (fuselage juste derrière les turboréacteurs, références TB1', TB2' pour turboréacteurs rentrés dans le fuselage et TB1, TB2 pour turboréacteurs sortis du fuselage) et E-E (fuselage au niveau du train arrière d'attérissage) de la figure 6.

Sur la figure 8, la distance 139 est par exemple égale à 630mm et la distance 140 par exemple égale à 505mm. Sur la figure 9, la distance 141 est, par exemple, égale à 2150mm et les distances 142 et 143 respectivement égales, par exemple, à 650mm et 600mm. Sur la figure 11, la distance 144 est par exemple égale à 870mm et le rayon R4 est par exemple égal à 1550mm.

La figure 12 est une vue de détail de la figure 6, à savoir une représentation en coupe longitudinale du réservoir d'hydrogène Rv ainsi que, en arrière-plan, d'un des deux réservoirs d'oxygène RO1. La distance 145 est égale, par exemple, à 18805mm et la distance 146 par exemple à 20471mm. Les rayons de courbures R4 et R5 sont respectivement égaux à 591mm et 1839mm.

La figure 13 représente une vue arrière en perspective du véhicule aérien de l'invention. Une porte P, préférentiellement formée de deux battants P1, P2, ferme l'accès du moteur fusée Mf sur l'extérieur. Le moteur fusée Mf est, par exemple, constitué d'un moteur principal Mp et de deux moteurs auxiliaires Ma1, Ma2 situés de part et d'autre du moteur principal, plus près de la partie basse du fuselage que le moteur principal.

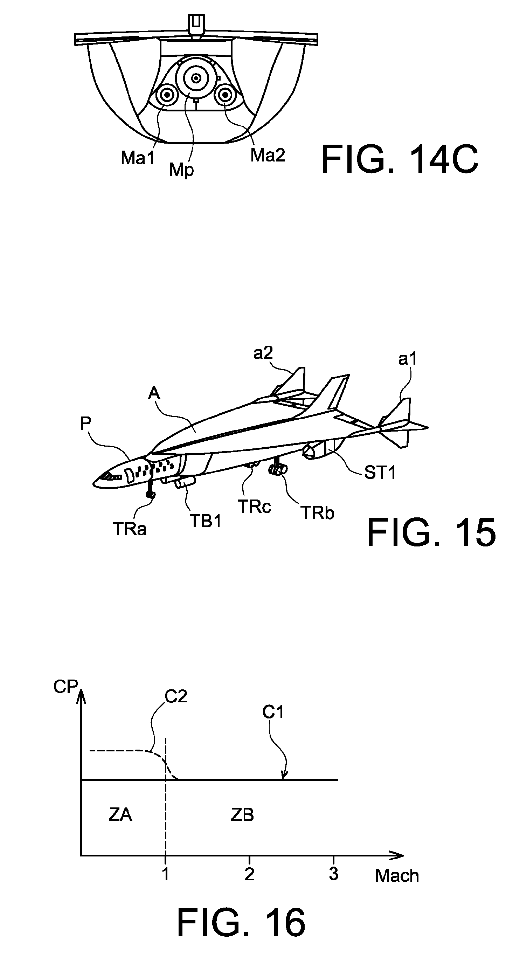

Les figures 14A, 14B, 14C représentent des vues arrière partielles du véhicule aérien de l'invention pour différentes position des battants de la porte P. Chacun des battants P1, P2 s'articule autour d'un axe horizontal propre. La figure 14A représente le cas où la porte P est fermée et, de ce fait, isole complètement le moteur fusée de l'extérieur (cas du moteur fusée éteint). La figure 14B représente le cas où le battant P1 est fermé et le battant P2 ouvert. Dans ce cas, seuls les moteurs auxilaires ont une ouverture vers l'extérieur, l'ouverture sur l'extérieur du moteur principal étant partiellement obstruée (cas du moteur principal éteint et des moteurs auxiliaires en fonctionnement). La figure 14C représente le cas où les deux battants sont ouverts. Le moteur principal et les moteurs auxiliaires sont ouverts sur l'extérieur (c'est le cas où moteur principal et moteurs auxiliaires fonctionnent). La figure 15 représente, à titre de simple illustration, une vue en perspective d'un véhicule aérien ultra-rapide de l'invention.

Comme cela est connu de l'homme de l'art, lors du vol d'un véhicule aérien, le centre de poussée et le centre de gravité du véhicule aérien doivent être confondus. La solution d'art antérieur relative à l'avion CONCORDE consistait à déplacer le centre de gravité de l'avion pour réaliser cette condition quelle que soit la vitesse de l'avion. Cette solution n'est toutefois possible que s'il est prévu des possibilités de lest mobile à bord de l'avion. Ce n'est pas le cas du transport aérien de l'invention. La solution de l'invention est de déplacer le centre de poussée du véhicule ultra-rapide en modifiant la position de l'ailette conformément à ce qui a été mentionné ci-dessus, en référence à la figure 2.

La figure 16 représente la variation estimée du centre de poussée CP du véhicule aérien de l'invention en fonction de la vitesse exprimée en nombre de Mach.

Dans une première zone ZA, la vitesse du véhicule est inférieure à la vitesse du son (Mach 1) et dans une deuxième zone ZB, la vitesse est supérieure à la vitesse du son. Une première courbe C1 représente la variation du centre de poussée CP dans le cas où les aillettes arrière a1, a2 sont horizontales dans la zone ZA et verticales dans la zone ZB. Une deuxième courbe C2 représente la variation du centre de pousée CP en l'absence d'aillettes arrière. Les courbes C1 et C2 se confondent dès lors que la vitesse du véhicule aérien est supérieure à Mach 1 (ailettes dans le plan perpendiculaire de l'aile delta). Avantageusement, il apparaît que la courbe C1 ne présente aucune variation du centre de poussée sur l'ensemble de la gamme des vitesses. Le véhicule aérien de l'invention est donc choisi avec des ailettes arrière conformes aux aillettes représentées sur les figures, la position des ailettes en fonction de la vitesse du véhicule aérien étant horizontale pour les vitesses inférieures à Mach 1 et verticale pour les vitesses supérieures à Mach 1.

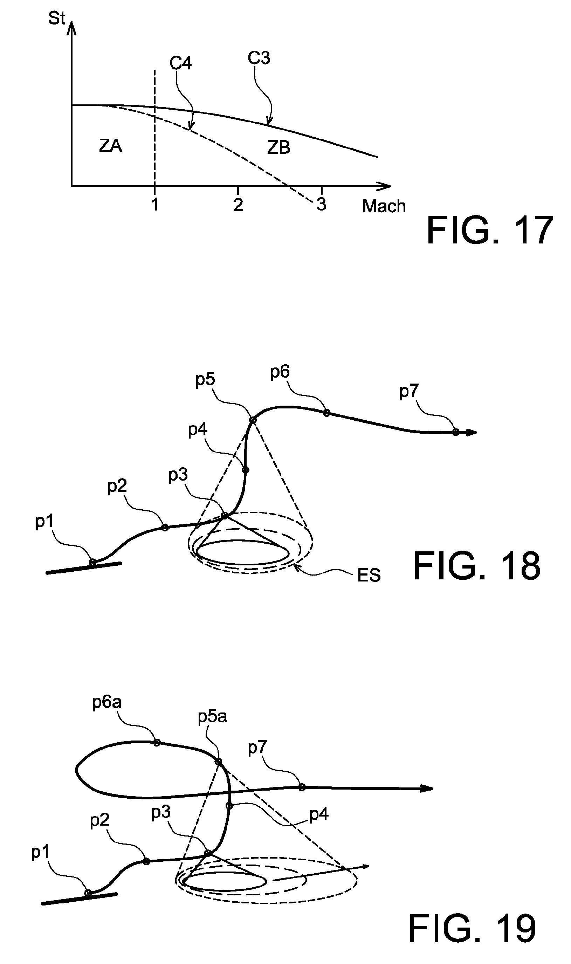

La figure 17 représente la variation de la stabilité de route St d'un véhicule aérien ultra-rapide de l'invention en fonction de la vitesse exprimée en Mach. La gamme des vitesses est également répartie entre les zones ZA et ZB définies ci-dessus. Une première courbe C3 représente la variation de la stabilité de route St dans le cas où les ailettes arrière sont horizontales dans la zone ZA et verticales dans la zone ZB et une deuxième courbe C4 représente la variation de la stabilité de route en l'absence d'ailettes arrière. Il apparaît clairement que la stabilité de route d'un transport aérien conforme à l'invention est excellente en soi et également très avantageuse par rapport à un véhicule dépourvu d'ailettes arrière, toutes choses égales par ailleurs. Au positionnement des ailettes décrit ci-dessus est associé un centrage de référence (i.e. une position du centre de gravité du véhicule) confondu avec le centre de poussée supersonique (courbe C1 en zone ZB de la figure 16). C'est un avantage supplémentaire de l'invention que de permettre de construire un véhicule aérien centré en secteur arrière.

Les figures 18-21 illustrent différentes phases de vol d'un véhicule aérien ultra rapide de l'invention.

La figure 18 représente un premier exemple de phase de départ du véhicule aérien de l'invention.

Le véhicule réalise une séquence de décollage conventionnelle, propulsé par les turboréacteurs TB1, TB2 assistés par le moteur fusée Mf. Le moteur fusée Mf peut être un moteur fusée unique à poussée continument variable ou un moteur fusée à poussée fractionnée constitué, par exemple, de trois ou quatre moteurs différents dont un moteur principal. Tout d'abord, le roulage du véhicule du point de stationnement au point d'alignement s'effectue à l'aide des seuls turboréacteurs (cf. point p1 sur la figure 18). Le lâcher des freins n'est ensuite effectué qu'une fois vérifié le bon fonctionnement du moteur fusée.

Le décollage se poursuit en configuration turboréacteurs/moteur fusée (cf. points p1 à p3 sur la figure 18), la vitesse de montée initiale du véhicule aérien étant de l'ordre de 350km/h (cf. points p1 à p2 sur la figure 18. Ensuite (cf. point p3 sur la figure 18), soit le moteur fusée principal est allumé (cas du moteur fractionné), soit la puissance maximale est déployée sur le moteur fusée (cas du moteur fusée unique) et l'ascension du véhicule aérien devient quasi-verticale. L'ouverture de la porte P est commandée en fonction des différentes configurations requises pour le bon fonctionnement du moteur fusée (cf. figures 14B, 14C précédemment décrites). En cas de non allumage du moteur fusée principal, les ergols cryotechniques sont consommés au cours d'un vol d'attente en palier et un retour vers les installations de départ peut être entrepris avec quasiment plus d'ergols à bord, ce qui contribue significativement à la sécurité d'un atterrissage en situation de mission avortée. Pendant l'ascension du véhicule, ce dernier produit une empreinte sonore ES dont la taille varie dans le temps et dont la durée est limitée. Dès lors que le moteur fusée principal est allumé ou qu'une poussée maximale est appelée sur le moteur fusée à poussée variable, une phase de montée sous forte poussée débute. Peu avant l'entrée dans le domaine du vol transsonique, les turboréacteurs sont arrêtés et rentrés à l'intérieur du fuselage. Un rapport poussée sur poids sensiblement égal ou supérieur à 1 est établi. Durant cette phase de vol, le véhicule effectue une montée sous forte pente (i.e. quasiment à la verticale) avec une accélération transsonique à haute altitude (par exemple entre 15000m et 20000m) grâce au moteur fusée (cf. point p4 sur la figure 18). Si le moteur fusée est à poussée variable, un contrôle précis de l'accélération peut avantageusement être effectué.

Ce type de trajectoire contribue significativement à la réduction des effets au sol du bang sonore de focalisation (dénommé «super-boom» en langue anglaise), qui apparaît au cours du passage du mur du son (Mach 1). En effet, compte tenu de la trajectoire quasi-verticale, aucune onde choc ne vient heurter le sol et l'énergie se dissipe dans toutes les directions radiales horizontales. Au sol, à la verticale du véhicule en accélération, l'empreinte sonore ES produite est confinée au voisinage de l'aéroport et dure sensiblement moins d'une minute.

Pendant la phase de décollage, dans un mode de réalisation particulier de l'invention, les passagers et, éventuellement, l'équipage sont placés dans des hamacs afin d'assurer un meilleur confort.

Une fois le véhicule en vol supersonique à très haute altitude (cf. point p5 sur la figure 18), la trajectoire est progressivement incurvée jusqu'à l'horizontale, par exemple à l'aide d'une trajectoire balistique, et, le moteur fusée étant arrêté et caréné par fermeture complète de la porte P et les statoréacteurs étant allumés, le véhicule entre dans son couloir de vol de croisière, par exemple à une altitude située entre 30000m et 35000m (cf. point p6 sur la figure 18). C'est la phase de vol de croisière qui débute (cf. point p7 sur la figure 18).

La figure 19 représente une variante de la phase de décollage du véhicule aérien de l'invention. Selon cette variante, le véhicule aérien effectue, dans un plan horizontal par rapport au sol, une boucle avant de prendre la direction de sa destination. Cette variante a pour but de réduire le bruit dans la zone de l'aéroport en déplaçant l'empreinte sonore loin de l'aéroport. De fait, au-delà de la phase d'ascension à la verticale, la trajectoire du véhicule est incurvée jusqu'à l'horizontale en rebroussant vers l'aéroport (cf. point p5a sur la figure 19) et le véhicule aérien entre dans le couloir de vol de croisière en un point plus proche de l'aéroport que dans le cas précédent (cf. point p6a sur la figure 19).

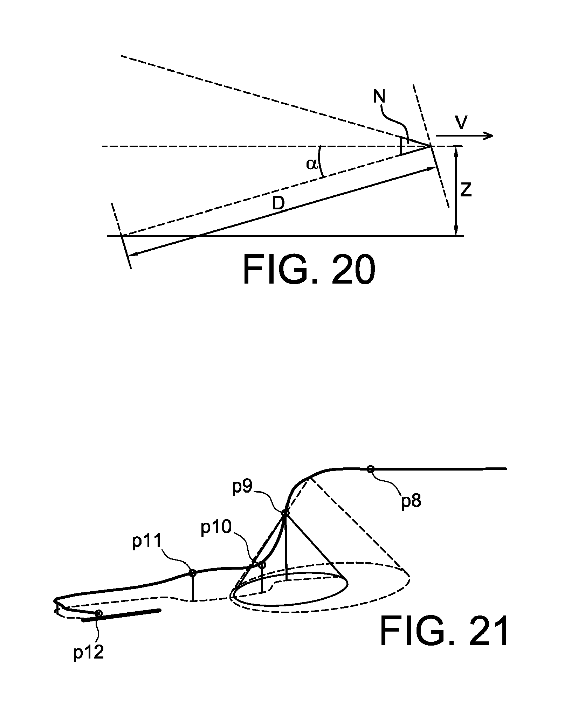

La figure 20 illustre de façon symbolique le véhicule aérien de l'invention dans le couloir de vol de croisière. Pour des raisons de simplicité, seul le nez N du véhicule de l'invention est représenté.

Dans le couloir de vol de croisière, les paramètres de vol sont, par exemple, les suivants :
- altitude Z de l'avion par rapport au sol sensiblement égale, par exemple, à 35000m ;
- distance D de dissipation sensiblement égale à 154km ;
- vitesse V de l'avion comprise entre Mach 4 et Mach 4,5 ; et
- angle α d'ouverture du cône de Mach sensiblement égal à 12,8°.

A titre de comparaison, dans le cas de l'art antérieur, pour l'avion CONCORDE, les valeurs des paramètres ci-dessus sont les suivantes:
- Z = 20000m ;
- D = 35km ;
- V = Mach 2 ;
- A = 30°.

Les stato-réacteurs ont une géométrie fixe, ce qui simplifie grandement leur complexité géométrique et réduit leur masse. Durant cette phase de vol, la poussée des stato-réacteurs est modulée selon le besoin (allégement véhicule au cours du vol...) par variation de débit d'hydrogène. Avantageusement, pendant le vol de croisière, le véhicule produit un impact environnemental très limité du fait de la très haute altitude de croisière ainsi que du cap constant du véhicule. Au besoin, des solutions géométriques de réduction de bang sonores telles que présentées au cours de la conférence HISAC 2009 (cf. conception de forme par Sukhoy et Dassault) peuvent être incorporés dans la conception du véhicule aérien, comme, par exemple, un dièdre de voilure prononcé.

Concernant les gaz émis par le véhicule durant les phases d'accélération et de croisière, il n'y a avantageusement pas de CO₂ émis mais seulement de la vapeur d'eau et, éventuellement, de l'hydrogène gazeux. Durant le vol de croisière, l'énergie électrique nécessaire au bon fonctionnement du véhicule (éclairage, climatisation, etc.) est fournie par tout moyen connu en soi tel que, par exemple, des batteries, des piles à combustible, etc.

A l'approche de l'aéroport de destination, une phase de décélération et de descente débute. La figure 21 représente un exemple de phase de décélération et de descente.

En vue de l'aéroport de destination (par exemple, à environ 750km de l'aéroport), les statoréacteurs sont coupés en un certain point de la trajectoire du véhicule (cf. point p8 de la figure 21). Le véhicule commence alors sa décélération. Un déploiement progressif des aérofreins (« split flaps » en langue anglaise) amène ensuite le véhicule dans une descente sous forte pente avec une vitesse quasi-verticale en transsonique (cf. point p9 de la figure 21). La descente sous forte pente est effectuée soit à très haute incidence, soit à incidence quasi-nulle sous aérofrein. Ainsi, le bang de focalisation (cf. le «super-boom» évoqué précédemment) est-il dirigé loin de la surface terrestre, les ondes sonores étant alors pratiquement horizontales. Une fois en régime de vol subsonique, une ressource est engagée et les aérofreins sont progressivement refermés (point p10 de la figure 21). Les turboréacteurs sont ensuite déployés (cf. point p11 de la figure 21) pour un redémarrage éventuellement assisté par vent relatif («wind milling» en langue anglaise). Au besoin, les passagers et, éventuellement, l'équipage peuvent être placés dans des hamacs pour un meilleur confort au cours de toute cette phase de descente.

Lors de la phase d'atterrissage, le véhicule aérien s'insère, à un moment donné, dans le trafic aérien existant, y compris, par exemple, pour être mis dans un circuit d'attente. L'approche finale du véhicule est alors réalisée de façon standard, c'est-à-dire à une vitesse du véhicule conforme à celle des avions civils classiques, en prévoyant de rendre possible toute remise des gaz si cela s'avère nécessaire. Une fois à terre, le véhicule roule jusqu'à s'immobiliser sous la seule poussée des turboréacteurs (point p12 sur la figure 21).

Une estimation préliminaire de l'assiette de vol à l'atterrissage conduit avantageusement à des valeurs plus faibles que pour l'avion CONCORDE.

Le roulage au sol du véhicule est assuré par les turboréacteurs qui confèrent à celui-ci une mobilité similaire à celle d'un avion de ligne classique.

Pendant ces phases, le véhicule respecte les réglementations environnementales en vigueur dans l'aviation civile.

Le ou les turboréacteurs ne sont utilisés que pendant les phases d'approche, d'attente, de remise des gaz et d'attérissage en fin de vol. Cette utilisation des turboréacteurs conduit à réduire considérablement leur taille et leur masse par rapport une utilisation standard. Le ou les turboréacteurs du véhicule aérien de l'invention sont en conséquence avantageusement faciles à rétracter à l'intérieur du fuselage.

De façon particulièrement avantageuse également, l'utilisation combinée de turboréacteurs et d'un moteur fusée apporte un excellent compromis en termes de rapport poussée sur masse associé à une trainée réduite en croisière, en particulier pour les phases d'approche et d'attérissage où le véhicule aérien est placé dans le traffic aérien existant.

## Revendications

1. Véhicule aérien comprenant un fuselage (F), une aile delta gothique (A) répartie de part et d'autre du fuselage et un système de moteurs (TB1, TB2, ST1, ST2, Mf) apte à propulser le véhicule aérien, **caractérisé en ce que** :
- Le fuselage contient un réservoir (Rv) d'hydrogène liquide ou à l'état de neige fondue et un ou plusieurs réservoirs d'oxygène liquide (RO1, RO2) ;
- L'aile delta gothique (A) a un extrados et un intrados plats, l'emplanture de l'aile prenant naissance sensiblement au niveau où débute un élargissement d'une partie avant du fuselage ;
- Une ailette (a1, a2) est fixée à chaque extrémité extérieure du bord de fuite de l'aile delta gothique à l'aide d'une pièce cylindrique dont l'axe est parallèle à l'axe du fuselage, chaque ailette étant constituée de deux éléments sensiblement identiques de forme trapézoïdale fixés à la pièce cylindrique et situés dans un même plan, de part et d'autre de la pièce cylindrique, chaque pièce cylindrique étant apte à se mouvoir en rotation autour de son axe de telle sorte que les deux éléments de forme trapézoïdale qui sont fixés à la pièce cylindrique soient positionnés soit dans un plan parallèle au plan de l'aile delta gothique, soit dans un plan perpendiculaire au plan de l'aile delta gothique; et
- Le système de moteurs comprend au moins un turboréacteur (TB1, TB2) situé au niveau d'une partie avant du fuselage et apte à se rétracter dans le fuselage, au moins un statoréacteur (ST1, ST2) de géométrie fixe et un moteur fusée (Mf) situé dans une partie arrière du fuselage, une porte (P) située sur la partie arrière du fuselage étant apte à s'ouvrir ou se fermer pour, respectivement, ouvrir le moteur fusée sur l'extérieur ou isoler le moteur fusée de l'extérieur.

2. Véhicule selon la revendication 1, dans lequel le fuselage (F) est constitué d'un tronçon avant ou nez qui prolonge un tronçon de cabine et d'un tronçon arrière, le tronçon avant ayant une section constante qui s'élargit progressivement à partir du tronçon de cabine et le tronçon arrière ayant une section constante qui rétrécit progressivement vers l'arrière du véhicule.

3. Véhicule selon la revendication 1 ou 2, dans lequel chaque réservoir d'oxygène liquide (RO1, RO2) a son centre de gravité positionné, qu'il soit vide ou plein, au plus près du centre de gravité du véhicule aérien;

4. Véhicule selon l'une quelconque des revendications précédentes, dans lequel le moteur fusée est constitué soit d'un moteur unique, soit d'un moteur principal accompagné de un ou plusieurs moteurs auxiliaires.

5. Véhicule selon l'une quelconque des revendications 1 à 4, dans lequel deux statoréacteurs (ST1, ST2) sont situés sous l'aile delta gothique, de part et d'autre du fuselage.

6. Véhicule selon l'une quelconque des revendications précédentes, dans lequel le véhicule a une flèche de bord d'attaque sensiblement comprise entre 70° et 75°, calculée en référence à une aile delta droite.

7. Véhicule aérien selon l'une quelconque des revendications 1 à 6, dans lequel le moteur fusée (Mf) est un moteur à poussée continument variable ou un moteur à poussée fractionnée.

8. Procédé de locomotion aérienne à l'aide d'un véhicule aérien conforme à l'une quelconque des revendications 1 à 7, le procédé comprenant un phase de décollage du véhicule, **caractérisé en ce que** la phase de décollage comprend les étapes suivantes :
- une étape de roulage au sol du véhicule durant laquelle le véhicule aérien est propulsé par le ou les turboréacteurs (TB1, TB2) pour atteindre un point d'alignement (p1), les deux éléments de forme trapézoïdale de chacune des deux ailettes (a1, a2) étant positionnés dans un plan parallèle à l'aile delta gothique ;
- une étape d'ouverture ou de vérification d'un état d'ouverture de la porte (P) située à l'arrière du véhicule ; et
- une étape d'envol durant laquelle le véhicule aérien est propulsé simultanément par le ou les turboréacteurs (TB1, TB2) et par le moteur fusée (Mf), le véhicule étant progressivement amené dans une phase de vol ascendante quasi-verticale par une forte poussée déployée par le moteur fusée (Mf) de sorte que le véhicule atteigne et dépasse la vitesse MACH 1 durant la phase de vol ascendante, le ou les turboréacteurs (TB1, TB2) étant arrêtés et rentrés dans le fuselage (F) avant que la vitesse MACH 1 ne soit atteinte et les deux éléments de forme trapézoïdale de chacune des deux aillettes (a1, a2) du véhicule aérien étant progressivement positionnés dans un plan perpendiculaire au plan de l'aile delta gothique dès lors que le véhicule atteint et/ou dépasse la vitesse MACH 1.

9. Procédé selon la revendication 8, **caractérisé en ce qu'**il comprend une étape durant laquelle le véhicule est progressivement amené en position horizontale par rapport au sol et **en ce que**, le moteur fusée étant arrêté et caréné et les statoréacteurs étant allumés, le véhicule entre dans une phase de vol de croisière dès lors qu'il atteint la position horizontale par rapport au sol.

10. Procédé selon la revendication 9, dans lequel le véhicule effectue, dans un plan horizontal par rapport au sol, une boucle rebroussant vers son point de départ avant d'entrer dans la phase de vol de croisière.

11. Procédé de locomotion aérienne à l'aide d'un véhicule aérien conforme à l'une quelconque des revendications 1 à 7, le procédé comprenant une phase d'atterrissage du véhicule à partir d'un couloir de vol de croisière dans lequel le véhicule est propulsé par une poussée du ou des statoréacteurs, les deux éléments de forme trapézoïdale de chacune des deux ailettes (a1, a2) étant positionnées dans un plan perpendiculaire à l'aile delta gothique, **caractérisé en ce que** la phase d'atterrissage du véhicule comprend les étapes suivantes :
- un arrêt du ou des des statoréacteurs (ST1, ST2) ;
- un déploiement progressif d'aerofreins qui amène le véhicule jusqu'à une phase de descente sous forte pente avec une vitesse quasi-verticale transonique qui diminue ;
- une modification de position des deux éléments de forme trapézoïdale de chacune des deux ailettes (a1, a2) de façon à placer lesdits éléments dans un plan parallèle au plan de l'aile delta gothique dès lors que la vitesse du véhicule atteint et/ou passe sous la vitesse MACH 1 ;
- une fermeture progressive des aérofreins et un déploiement des turboréacteurs dès lors que la vitesse du véhicule devient inférieure à MACH 1; et
- une insertion du véhicule dans le traffic aérien standard.

12. Procédé selon la revendication 11, dans lequel la phase de descente sous forte pente est effectuée soit à très haute incidence, soit à incidence quasi-nulle.

13. Procédé selon l'une quelconque des revendications 9 à 12, dans lequel le vol de croisière est **caractérisé par** :
- Une altitude de l'avion par rapport au sol sensiblement comprise entre 30000m et 35000m ;
- Une distance de dissipation de l'onde de choc de nez de véhicule sensiblement comprise entre 110km et 175km ;
- Une vitesse de l'avion comprise entre Mach 4 et Mach 4,5 ; et
- Un angle α d'ouverture du cône de Mach sensiblement compris entre 11° et 15°.

## Patentansprüche

1. Luftfahrzeug, umfassend einen Rumpf (F), einen gotischen Deltaflügel (A), der beiderseits des Rumpfes verteilt ist, und ein System von Motoren (TB1, TB2, ST1, ST2, Mf), das geeignet ist, das Luftfahrzeug anzutreiben, **dadurch gekennzeichnet, dass**:
- der Rumpf einen Behälter (Rv) von flüssigem Wasserstoff oder im Zustand von geschmolzenem Schnee und einen oder mehrere Behälter von flüssigem Sauerstoff (RO1, RO2) enthält;
- der gotische Deltaflügel (A) eine flache Oberseite und Unterseite hat, wobei die Flügelwurzel im Wesentlichen in dem Bereich ihren Ursprung nimmt, in dem eine Erweiterung eines vorderen Teils des Rumpfes beginnt;
- eine Rippe (a1, a2) an jedem äußeren Ende der Hinterkante des gotischen Deltaflügels mit Hilfe eines zylindrischen Teils befestigt ist, dessen Achse zur Achse des Rumpfes parallel ist, wobei jede Rippe von zwei im Wesentlichen identischen Elementen mit Trapezform gebildet ist, die am zylindrischen Teil befestigt sind und sich in einer selben Ebene beiderseits des zylindrischen Teils befinden, wobei jeder zylindrische Teil geeignet ist, sich in Drehung um seine Achse zu bewegen, so dass die beiden Elemente mit Trapezform, die am zylindrischen Teil befestigt sind, entweder in einer Ebene parallel zur Ebene des gotischen Deltaflügels oder in einer Ebene senkrecht zur Ebene des gotischen Deltaflügels positioniert sind;
und
- das System von Motoren mindestens einen Turboreaktor (TB1, TB2), der sich im Bereich eines vorderen Teils des Rumpfes befindet und geeignet ist, sich in den Rumpf einzuziehen, mindestens einen Statoreaktor (ST1, ST2) mit fester Geometrie und einen Raketenmotor (Mf) umfasst, der sich in einem hinteren Teil des Rumpfes befindet, wobei eine Tür (P), die sich auf dem hinteren Teil des Rumpfes befindet, geeignet ist, sich zu öffnen oder zu schließen, um den Raketenmotor für den Außenbereich zu öffnen bzw. den Raketenmotor vom Außenbereich zu isolieren.

2. Fahrzeug nach Anspruch 1, bei dem der Rumpf (F) von einem vorderen Abschnitt oder einer Nase, die einen Kabinenabschnitt verlängert, und einem hinteren Abschnitt gebildet ist, wobei der vordere Abschnitt einen konstanten Querschnitt hat, der sich progressiv von dem Kabinenabschnitt aus erweitert, und wobei der hintere Abschnitt einen konstanten Querschnitt hat, der sich progressiv nach hinten zum Fahrzeug verkleinert.

3. Fahrzeug nach Anspruch 1 oder 2, bei dem jeder Behälter von flüssigem Sauerstoff (RO1, RO2) seinen Schwerpunkt möglichst nahe zum Schwerpunkt des Luftfahrzeugs positioniert hat, egal ob er leer oder voll ist.

4. Fahrzeug nach einem der vorhergehenden Ansprüche, bei dem der Raketenmotor entweder von einem einzigen Motor oder von einem Hauptmotor in Begleitung von einem oder mehreren Hilfsmotoren gebildet ist.

5. Fahrzeug nach einem der Ansprüche 1 bis 4, bei dem zwei Statoreaktoren (ST1, ST2) unter dem gotischen Deltaflügel beiderseits des Rumpfes angeordnet sind.

6. Fahrzeug nach einem der vorhergehenden Ansprüche, bei dem das Fahrzeug eine Angriffskantenkrümmung von im Wesentlichen zwischen 70° und 75°, berechnet unter Bezugnahme auf einen geraden Deltaflügel, hat.

7. Luftfahrzeug nach einem der Ansprüche 1 bis 6, bei dem der Raketenmotor (Mf) ein Motor mit kontinuierlich variablem Schub oder ein Motor mit fraktioniertem Schub ist.

8. Verfahren zur Fortbewegung in der Luft mit Hilfe eines Luftfahrzeugs nach einem der Ansprüche 1 bis 7, wobei das Verfahren eine Phase des Starts des Fahrzeugs umfasst, **dadurch gekennzeichnet, dass** Startphase die folgenden Schritte umfasst:
- einen Schritt des Fahrens des Fahrzeugs am Boden, während dessen das Luftfahrzeug durch den oder die Turboreaktoren (TB1, TB2) angetrieben wird, um einen Ausrichtungspunkt (p1) zu erreichen, wobei die beiden Elemente mit Trapezform jeder der beiden Rippen (a1, a2) in einer Ebene parallel zum gotischen Deltaflügel angeordnet sind;
- einen Schritt des Öffnens oder des Prüfens eines Öffnungszustandes der Tür (P), die sich hinten am Fahrzeug befindet; und
- einen Schritt des Fliegens, während dessen das Luftfahrzeug gleichzeitig von dem oder den Turboreaktoren (TB1, TB2) und von dem Raketenmotor (Mf) angetrieben wird, wobei das Fahrzeug progressiv in eine gleichsam vertikale Steigflugphase durch einen starken Schub gebracht wird, der vom Raketenmotor (Mf) erzeugt wird, so dass das Fahrzeug die Geschwindigkeit MACH 1 während der Steigflugphase erreicht und überschreitet, wobei der oder die Turboreaktoren (TB1, TB2) angehalten und in den Rumpf (F) eingezogen werden, bevor die Geschwindigkeit MACH 1 erreicht ist, und wobei die beiden Elemente mit Trapezform jeder der beiden Rippen (a1, a2) des Luftfahrzeugs progressiv in einer Ebene senkrecht zur Ebene des gotischen Deltaflügels positioniert werden, sobald das Fahrzeug die Geschwindigkeit MACH 1 erreicht und/oder überschreitet.

9. Verfahren nach Anspruch 8, **dadurch gekennzeichnet, dass** es einen Schritt umfasst, während dessen das Fahrzeug progressiv in eine horizontale Position in Bezug zum Boden gebracht wird, und dass, wobei der Raketenmotor angehalten und abgedeckt und die Statoreaktoren eingeschaltet werden, das Fahrzeug in eine Reiseflugphase eintritt, sobald es die horizontale Position in Bezug zum Boden erreicht.

10. Verfahren nach Anspruch 9, bei dem das Fahrzeug in einer Horizontalebene zum Boden eine Rückschleife zu seinem Ausgangspunkt ausführt, bevor es in die Reiseflugphase eintritt.

11. Verfahren zur Fortbewegung in der Luft mit Hilfe eines Luftfahrzeugs nach einem der Ansprüche 1 bis 7, wobei das Verfahren eine Landephase des Fahrzeugs von einem Reiseflugkorridor, in dem das Fahrzeug durch einen Schub des oder der Statoreaktoren angetrieben wird, umfasst, wobei die beiden Elemente mit Trapezform jeder der beiden Rippen (a1, a2) in einer Ebene senkrecht zum gotischen Deltaflügel positioniert sind, **dadurch gekennzeichnet, dass** die Landephase des Fahrzeugs die folgenden Schritte umfasst:
- Anhalten des oder der Statoreaktoren (ST1, ST2);
- progressives Ausfahren der Luftbremsen, das das Fahrzeug in eine Sinkphase unter starkem Gefälle mit einer gleichsam vertikalen Unterschallgeschwindigkeit, die sich verringert, bringt;
- Ändern der Position der beiden Elemente mit Trapezform jeder der beiden Rippen (a1, a2), um die Elemente in einer Ebene parallel zur Ebene des gotischen Deltaflügels anzuordnen, sobald die Geschwindigkeit des Fahrzeugs die Geschwindigkeit MACH 1 erreicht und/oder unterschreitet;
- progressives Schließen der Luftbremsen und Ausfahren der Turboreaktoren, sobald die Geschwindigkeit des Fahrzeugs unter MACH 1 sinkt;
und
- Einfügen des Fahrzeugs in den Standardluftverkehr.

12. Verfahren nach Anspruch 11, bei dem die Sinkphase unter starkem Gefälle entweder bei sehr großem Einfallswinkel oder bei einem Einfallswinkel gleichsam gleich null erfolgt.

13. Verfahren nach einem der Ansprüche 9 bis 12, bei dem der Reiseflug **gekennzeichnet ist durch**:
- eine Höhe des Flugzeugs in Bezug zum Boden von im Wesentlichen zwischen 30000 m und 35000 m;
- eine Abfederungsdistanz der Stoßwelle der Fahrzeugnase von im Wesentlichen zwischen 110 km und 175 km;
- eine Geschwindigkeit des Flugzeugs zwischen MACH 4 und MACH 4,5; und
- einen Öffnungswinkel α des MACH Konus von im Wesentlichen zwischen 11° und 15°.

## Claims

1. An air vehicle including a fuselage (F), a gothic delta wing (A) distributed either side of the fuselage, and a system of motors (TB1, TB2, ST1, ST2, Mf) able to propel the air vehicle, **characterised in that**:
- The fuselage contains a tank (Rv) of hydrogen which is liquid or in the state of slush, and one or more liquid oxygen tanks (RO1, RO2);
- The gothic delta wing (A) has a flat extrados and a flat intrados, and the wing root starts roughly in the area where the forward part of the fuselage broadens;
- A fin (a1, a2) is attached to each outer end of the trailing edge of the delta wing using a cylindrical part the axis of which is parallel to the axis of the fuselage, where each fin consists of two roughly identical trapezoid-shaped elements attached to the cylindrical part and located in the same plane, either side of the cylindrical part, where each cylindrical part is able to rotate around its axis such that both trapezoid-shaped elements which are attached to the cylindrical part are positioned either in a plane parallel to the plane of the gothic delta wing, or in a plane perpendicular to the gothic delta wing; and
- The system of motors includes at least one turbojet (TB1, TB2) positioned in a forward portion of the fuselage and able to be retracted into the fuselage, at least one fixed-geometry ramjet (ST1, ST2), and one rocket motor (Mf) positioned in a rear part of the fuselage, where a door (P) located in the rear part of the fuselage is able to be opened or closed, respectively to expose the rocket motor to the exterior, or to isolate the rocket motor from the exterior.

2. A vehicle according to claim 1, in which the fuselage (F) consists of a front segment or nose, which extends a cabin segment, and of a rear segment, where the front segment is of a constant section which gradually broadens from the cabin section, and where the rear segment is of a constant section which gradually narrows towards the rear of the vehicle.

3. A vehicle according to claim 1, in which the centre of gravity of each liquid oxygen tank (RO1, RO2) is positioned, whether empty or full, as close as possible to the centre of gravity of the air vehicle;

4. A vehicle according to claim 1, in which the rocket motor consists either of a single motor, or of a main motor accompanied by one or more auxiliary motors.

5. A vehicle according to claim 1, in which two ramjets (ST1, ST2) are located under the gothic delta wing, either side of the fuselage.

6. A vehicle according claim 1, in which the vehicle has a leading edge sweep of roughly between 70° and 75°, calculated in reference to a straight delta wing.

7. A vehicle according to claim 1, in which the rocket motor (Mf) is a motor with continuously variable thrust or a fractional-thrust motor.

8. A method for aerial locomotion using an air vehicle in accordance with any of the claims 1 to 7, where the method includes a phase of takeoff of the vehicle, **characterised in that** the takeoff phase includes the following steps:
- a step of taxiing of the vehicle on the ground, during which the vehicle is propelled by the turbojets (TB1, TB2) to reach a point of alignment (p1), where both trapezoid-shaped elements of both fins (a1, a2) are positioned in a plane parallel to the gothic delta wing;
- a step of opening or of verification of a state of opening of the door (P) located at the rear of the vehicle; and
- a step of takeoff, during which the air vehicle is propelled simultaneously by the turbojet or turbojets (TB1, TB2), and by the rocket motor (Mf), where the vehicle is gradually brought into a phase of near-vertical ascendant flight by a very powerful thrust deployed by the rocket motor (Mf), such that the vehicle reaches and exceeds MACH 1 speed during the ascendant flight phase, where the turbojet or turbojets (TB1, TB2) are shut down and withdrawn into the fuselage (F) before the MACH 1 speed is reached, and where the positions of both trapezoid-shaped elements of both fins (a1, a2) of the air vehicle are gradually brought into a plane perpendicular to the plane of the gothic delta wing after the vehicle reaches and/or exceeds MACH 1 speed.

9. A method according to claim 8, **characterised in that** it includes a step during which the vehicle is gradually brought into a horizontal position relative to the ground, and **in that**, with the rocket motor shut down and made streamlined, and the ramjets ignited, the vehicle enters into a cruising flight phase after it reaches the horizontal position relative to the ground.

10. A method according to claim 9, in which the vehicle accomplishes, in a horizontal plane relative to the ground, a loop turning back towards its point of departure before entering into the cruising flight phase.

11. A method for aerial locomotion using an air vehicle in accordance with any of the claims 1 to 7, where the method includes a phase of landing of the vehicle from a cruising flight corridor in which the vehicle is propelled by a thrust of the ramjet or ramjets, where the positions of both trapezoid-shaped elements of both fins (a1, a2) are brought into a plane perpendicular to the gothic delta wing, **characterised in that** the vehicle's landing phase includes the following steps:
- shutdown of the ramjet or ramjets (ST1, ST2);
- gradual deployment of split flaps which bring the vehicle into a descent phase in a steep gradient with a reducing transonic near-vertical speed;
- modification of the position of both trapezoid-shaped elements of both fins (a1, a2) so as to position the said elements in a plane parallel to the plane of the gothic delta wing, when the speed of the vehicle reaches and/or becomes less than MACH 1 speed;
- gradual closure of the split flaps and deployment of the turbojet, after the speed of the vehicle becomes less than MACH 1; and
- insertion of the vehicle into standard air traffic.

12. A method according to claim 11, in which the phase of descent with a steep gradient is accomplished either with a very high angle of attack, or with a near-zero angle of attack.

13. A method according to claim 9, in which the cruising flight is **characterised by**:
- An altitude of the aircraft relative to the ground of roughly between 30000m and 35000m;
- A dissipation distance of the shockwave of the vehicle's nose of roughly between 110km and 175km;
- A speed of the aircraft of between Mach 4 and Mach 4.5; and
- An aperture angle α of the Mach cone of roughly between 11° and 15°.
